# EUROPEAN PATENT APPLICATION

(11) **EP 3 603 886 A1**
(43) Date of publication of application: **05.02.2020**
(21) Application number: 18765350.6
(22) Date of filing: 31.08.2018
(51) Int. Cl.: B24B 55/03, B24B 9/08, B24B 55/12

(54) **COOLING WATER CIRCULATING SYSTEM AND COOLING WATER CIRCULATING CONTROL METHOD**

(30) Priority: 20.06.2018 CN 201810636943
(71) Applicant: Beijing Apollo Ding Rong Solar Technology Co. Ltd., Beijing 100176 (CN)
(72) Inventor: The designation of the inventor has not yet been filed
(74) Representative: D'Halleweyn, Nele Veerle Trees Gertrudis
(86) International application number: PCT/CN2018/103597
(87) International publication number: WO 2019/242103

(57) **Abstract**

A cooling water circulation system and a cooling water circulation control method are provided. The cooling water circulation system includes a main tank configured for supplying water and a first return line configured for returning the water in a glass edger to the main tank. The main tank is in communication with the glass edger through a water supply line. The cooling water circulation system further includes a filtering mechanism configured to filter out and collect the glass powder in the circulating water.

## Description

The present disclosure claims priority to Chinese patent application No. 201810636943.1, entitled "Cooling Water Circulation System and Method for Using the Same", filed to the CNIPA on June 20, 2018, the entire content of which is incorporated herein by reference.

### Technical Field

The present disclosure relates to, but is not limited to, an apparatus for processing solar assemblies, in particular to a cooling water circulation system and a cooling water circulation control method for a glass edger which is used to solar assemblies.

### Background

At present, a glass edger provided in the market needs cooling water to cool the action part during the action process and take away the milled glass powder. The cooling water circulation system of the conventional glass edger only includes a main tank, a water supply line and a return line, and the working process of such system is relatively simple. The whole circulation process can be completed only by supplying water from the main tank to the glass edger and then returning the water flowing out of the glass edger into the main tank through the return line.

Due to the continuous production of glass powder during the operation of the glass edger, the concentration of glass powder suspended in the main tank is continuously increased, and the content of glass powder in the cooling water applied onto the glass edger is also continuously increased, which will affect the film layer of the glass surface. Glass powder is deposited in the main tank and agglomerated, making it difficult to clean. In order to decrease the concentration of glass powder suspended in the main tank, fresh water needs to be continuously replenished during the circulation process and thus the water resource consumption is large.

### Summary

The following is an overview of the subject matter described in detail herein. This summary is not intended to limit the protection scope of the claims.

An embodiment of this disclosure provides a cooling water circulation system, which includes a main tank configured for supplying water and a first return line configured for returning the water in a glass edger to the main tank. The main tank is in communication with the glass edger through a water supply line. The cooling water circulation system further includes a filtering mechanism configured to filter out and collect the glass powder in the circulating water.

An embodiment of this disclosure also provides a cooling water circulation control method including:
after a glass edger and a cooling water circulation system are initiated, continuously supplying the water from the main tank to the glass edger, and recycling the circulating water returned from the glass edger through a first return line;
collecting the circulating water in a flocculating tank, and introducing a flocculant from a flocculant container into the flocculating tank through an injection line so as to flocculate the glass powder in the circulating water collected in the flocculating tank; and
returning the clear water from an upper part of the flocculating tank to the main tank through a second return line, so as to realize a full cyclic utilization of cooling water and reduce the water resource consumption.

### Brief Description of Drawings

FIG. 1 is a schematic view of a cooling water circulation system according to an embodiment of the present disclosure;
FIG. 2 is an enlarged view of part A of FIG. 1;
FIG. 3 is an enlarged view of part B of FIG. 1;
FIG. 4 is an enlarged view of part C of FIG. 1;
FIG. 5 is a partial structural schematic view of a cooling water circulation system according to another embodiment of the present disclosure;
FIG. 6 is a partial structural schematic view of a cooling water circulation system according to yet another embodiment of the present disclosure;
FIG. 7 is a structural schematic view of a cooling water circulation system according to still another embodiment of the present disclosure;
FIG. 8 is a partial structural schematic view of a cooling water circulation system according to still another embodiment of the present disclosure.

Reference signs: 1 - glass edger, 2 - main tank, 3 - flocculating tank, 4 - glass powder collector, 5 - flocculant container, 6 - filter, 7 - water-gas separator, 8 - water supply line, 9 - first return line, 10 - outflow pipe at the bottom of the main tank, 11 - second return line, 12 - outflow pipe at the bottom of the flocculating tank, 13 - third return line, 14 - injection line, 15 - water supply pump, 16 - return pump, 17 - valve, 18 - first lift pump, 19 - second lift pump, 20 - fresh water inlet, 21 - first drain outlet, 22 - metering pump, 23 - second stirring device, 24 - second stirring motor, 25 - third stirring device, 26 - third stirring motor, 27 - first stirring device, 28 - first stirring motor, 29 - second drain outlet, 30 - coolant barrel, 31 - coolant mixer, 32 - overflow port, 33 - separation barrel, 34- water reservoir, 35 - silencer.

### Detailed Description

With the cooling water circulation system and the cooling water circulation control method, the problem of depositing and agglomerating in the main tank can be overcome, the influence of cooling water on the film layer of the glass surface can be relieved, and the cooling water consumption can be reduced.

Hereinafter, embodiments of the present disclosure will be described in detail in combination with the accompanying drawings. It should be illustrated that, if without conflict, the embodiments and features in the embodiments of the present disclosure may be combined with each other arbitrarily.

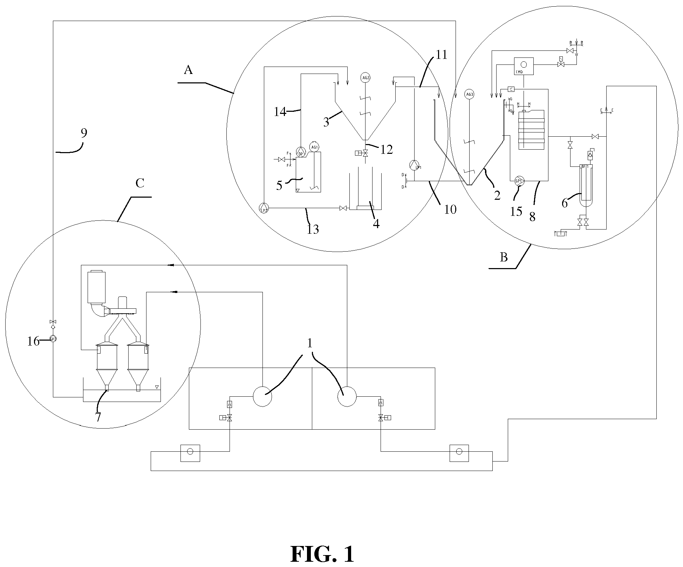

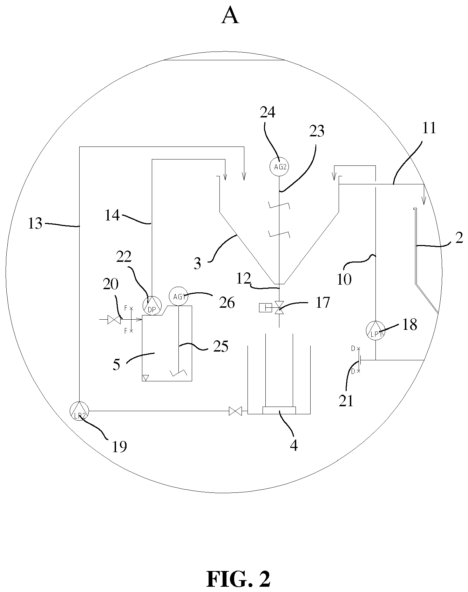

As shown in FIGs. 1 to 4, the cooling water circulation system includes a main tank 2 provided for supplying water and a first return line 9 for directly or indirectly returning water from the glass edger 1 to the main tank 2. The main tank 2 is communicated with the glass edger 1 through a water supply line 8. The water supply line 8 and the first return line 9 are respectively provided with a water supply pump 15 and a return pump 16 for supplying power to allow the water to flow. The main tank 2 is provided with a filtering mechanism that can filter and collect glass powder in the main tank 2 and prevent glass powder from being deposited and agglomerated in the main tank 2, thereby reducing the content of the glass powder in the circulating water, improving the quality of the glass products, and reducing the cooling water consumption.

In an exemplary embodiment, as shown in FIGs. 1 to 4, the filtering mechanism includes a flocculating tank 3, a glass powder collector 4 and a flocculant container 5 arranged to complete a primary filtration, and a filter 6 arranged to complete a secondary filtration. Both the glass powder collector 4 and the flocculant container 5 are communicated with the flocculating tank 3 which provides a space to allow the glass powder to flocculate and settle for the entire cooling water circulation system. The flocculating tank 3 is communicated with the bottom of the main tank 2 through an outflow pipe 10 at the bottom of the main tank, and the circulating water containing more glass powder at the bottom of the main tank 2 is introduced into the flocculating tank 3 by the first lift pump 18. In addition, a second return line 11 is provided at the top of the flocculating tank 3, and arranged to return the clear water at the top to the main tank 2. In order to collect the glass powder, the glass powder collector 4 is arranged at the bottom of the flocculating tank 3, and these two are communicated through an outflow pipe 12 at the bottom of the flocculating tank. The glass powder entering the glass powder collector 4 can be filtered and collected in a powder collection bag. In order to ensure that the return water in the flocculating tank 3 is stayed in the flocculating tank 3 to complete the flocculating process, the outflow pipe 12 at the bottom of the flocculating tank is provided with a valve 17, preferably a pneumatic valve, which is arranged to control the communication and closure of the flocculating tank 3 and the glass powder collector 4. The glass powder collector 4 is also provided with a third return line 13 configured to return the separated clear water to the flocculating tank 3, and the third return line 13 is provided with a second lift pump 19 for supplying power to allow the water to return. In order to ensure that sufficient flocculant is continuously supplied, the flocculant container 5 is connected to the flocculating tank 3 through the injection line 14 and the flocculant is injected into the flocculating tank 3. The injection line 14 is provided with a metering pump 22, which can not only measure the dosage of flocculant but also provide power for flocculant injection. Therefore, the flocculating tank 3, the glass powder collector 4 and the flocculant container 5 together can preliminarily purify the cooling water in the main tank 2 so that the water flowing from the main tank 2 into the water supply line 8 contains less glass powder.

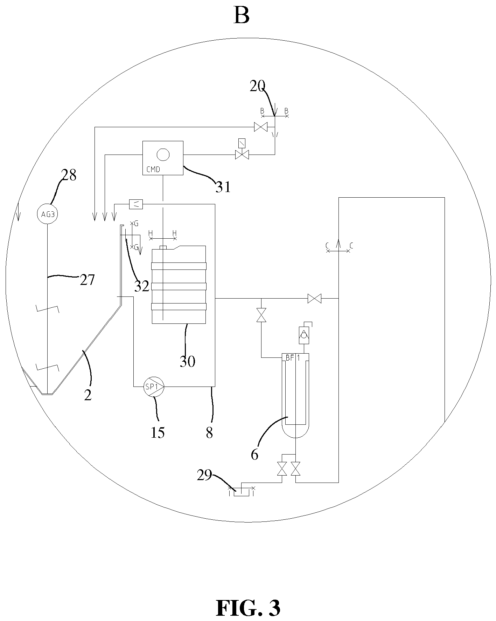

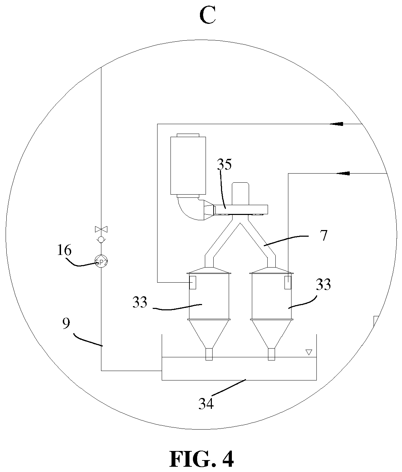

In order to better purify the cooling water, as shown in FIG. 3, it is possible that the water supply line 8 is provided with a filter 6 through which the cooling water flows to better filter out the glass powder in the water supply line 8. The filtered glass powder can be discharged through the second drain outlet 29. Also, in order to improve the water return efficiency, as shown in FIG. 4, the first return line 9 may be provided with a water-gas separator 7 at the end connected with the glass edger 1, which can vacuum-absorb air and water from the glass edger 1. The water-gas separator 7 includes a separation barrel 33, a water reservoir 34 and a silencer 35 connected to each other. The separation barrel 33 separates the water and the gas and the separated air is discharged from the silencer 35. The separated water enters the water reservoir 34 so as to be collected and flows to the main tank 2 along the first return line 9. In addition, a liquid level detector is provided in the water reservoir 34, which helps to adjust the flow rate in the first return line 9 in real time and prevent the water in the water reservoir 34 from overflowing.

The main tank 2, the flocculating tank 3 and the flocculant container 5 may be each communicated with the fresh water inlet 20 through which the main tank 2, the flocculating tank 3 and the flocculant container 5 may be replenished with pure fresh water. In order to cool the circulating water in the main tank 2 and ensure that the water used in the glass edger 1 has a lower temperature, the main tank 2 is further provided with a coolant mixer 31 and a coolant barrel 30 arranged to store coolant. The coolant mixer 31 is provided with a medicament inlet connected to the coolant barrel 30 and a water inlet connected to the fresh water inlet 20. The water and coolant are mixed in the coolant mixer 31 and then discharged into the main tank 2 to act on the circulating water. In addition, an overflow port 32 is provided at the top of the main tank 2 to control the water level in the main tank 2.

The main tank 2 may be provided with a first stirring device 27, which is driven by a first stirring motor 28 to stir water in the main tank 2 so as to prevent glass powder from quickly settling and agglomerating in the main tank 2. The flocculating tank 3 is internally provided with a second stirring device 23, which is driven by a second stirring motor 24 to stir the water in the flocculating tank 3 so as to promote rapid flocculation. The flocculant container 5 is internally provided with a third stirring device 25, which is driven by a third stirring motor 26 to stir the water and flocculant in the flocculant container 5 so as to fully mix them.

In order to facilitate the control of the whole circulation process, it is possible that the cooling water circulation system is further provided with a controller. The controller is connected with the metering pump 22, the first lift pump 18, the second lift pump 19, the valve 17, the water supply pump 15, the return pump 16, the first stirring motor 28 and other devices, respectively, and is configured to control the opening and closing of the pumps, the stirring time, the stirring interval, the dosing interval, the dosing time, the flocculation time and the like so as to realize an automatic control.

The above-mentioned cooling water circulation system creates a closed-loop circulation process. Before the glass edger 1 and the cooling water circulation system are operated, it is needed to inject water into the main tank 2, the flocculating tank 3 and the flocculant container 5, and add medicament appropriately according to the flocculant concentration and coolant concentration to complete the initial injection of water and medicament. After the glass edger 1 and the cooling water circulation system are initiated, the main tank 2 is required to continuously supply water to the glass edger 1 through the water supply line 8, and the flow rate of the cooling water can be adjusted by setting a return valve. After passing through the glass edger 1, the cooling water is heated up and recycled to the separation barrel 33 by the water-gas separator 7. The air is discharged through the silencer 35 located above, the returned water converges to the water reservoir 34 under the action of gravity and is recycled to the main tank 2 by the return pump 16. Subsequently, the first stirring device 27 is operated, the glass powder in the circulating water in the main tank 2 is settled, the water in the main tank 2 is continuously lifted to the flocculating tank 3, and the flocculant container 5 injects flocculant into the flocculating tank 3. The second return line 11 continuously returns clear water from the upper part of the flocculating tank 3 to the main tank 2, and the glass powder is combined with the flocculant to produce large polymer, and precipitate quickly and flocculate fully. The second stirring device 23 stirs periodically. After the flocculation is performed for a predetermined time, the valve 17 is opened, the precipitate and part of the water enter the glass powder collector 4. After filtration, the precipitate is completely retained in the powder collecting bag of the glass powder collector 4, and the separated water is re-injected into the flocculating tank 3 and returned to the main tank 2 through the second return line 11, so as to complete the whole circulation process. During the circulation process, the medicament can be periodically injected from the flocculant container 5 into the flocculating tank 2 by the metering pump 22. When the flocculating tank 3 continuously purifies the water in the main tank 2, the first return line 9 will still carry the circulating water with glass powder, thus a small amount of glass powder still exists in the circulating water just conveyed into the water supply line 8. The circulating water flowing out of the main tank 2 can be filtered by a filter 6 for a second time to completely remove the glass powder. In addition, according to the water levels in the main tank 2, flocculating tank 3 and flocculant container 5, the controller can appropriately replenish water through the fresh water inlet 20.

The amount of water consumed by the cooling water circulation system of this embodiment is only 2 % of that consumed by the original system, which can greatly reduce the water resource consumption, and the collection during the whole circulation process is convenient, thus the manpower is saved and the environment is protected.

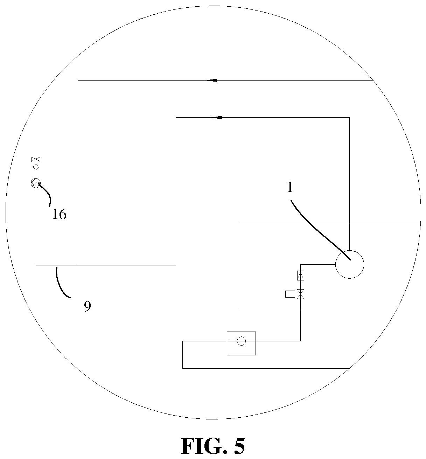

In an exemplary embodiment, as shown in FIG. 5, the first return line 9 is connected to the glass edger 1 with no water-gas separator 7 disposed therebetween. When the cooling water circulation system is operated, the return water passing through the glass edger 1 is directly led back to the main tank 2 through the first return line 9 under the action of the return pump 16. The overall structure is simplified, and the apparatus cost is reduced. However, the water return efficiency is reduced.

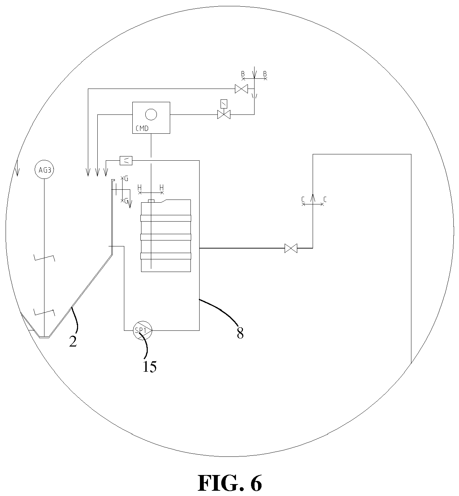

In an exemplary embodiment, as shown in FIG. 6, no filter 6 is provided on the water supply line 8. The circulating water in the main tank 2 treated by the flocculating tank 3 is directly supplied to the glass edger 1 through the water supply line 8, and does not pass through the filter 6 for the secondary filtration. The line structure is simplified and the water consumption and precipitation in the main tank 2 can be significantly improved, but the circulating water leading to the glass edger 1 still contains low content of glass powder, which will affect the glass processing quality.

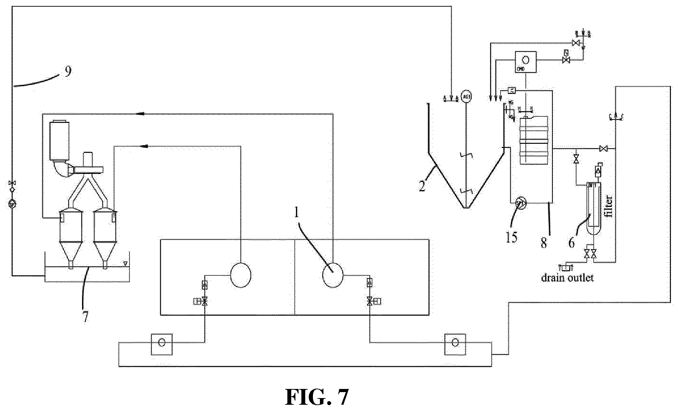

In an exemplary embodiment, as shown in FIG. 7, the cooling water circulation system includes a main tank 2 communicating with a glass edger 1 through a water supply line 8, a filtering mechanism including a filter 6 provided on the water supply line 8 to filter out glass powder flowing through the water supply line 8, and a first return line 9. After the cooling water circulation system is initiated, the main tank 2 continuously supplies water to the glass edger 1. After passing through the glass edger 1, the circulating water is recycled to the main tank 2 by a return pump 16. Subsequently, the circulating water in the main tank 2 passes through the filter 6, so that the glass powder in the circulating water is collected and the filtered circulating water is led to the glass edger 1, thereby completing the whole circulation process. The structure of the filter mechanism is simplified. However, when the circulating water contains a large amount of glass powder, the maintenance of the filter needs to be performed more frequently.

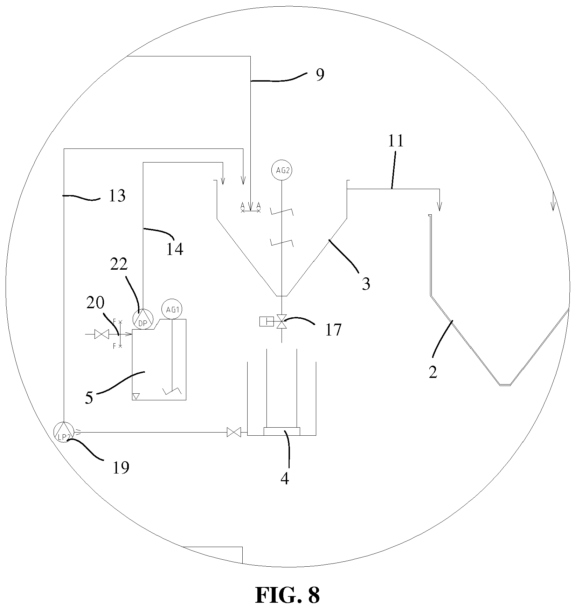

In an exemplary embodiment, as shown in FIG. 8, the filtering mechanism includes a flocculating tank 3, a glass powder collector 4, and a flocculant container 5. The glass powder collector 4 and the flocculant container 5 are both in communication with the flocculating tank 3. The flocculating tank 3 provides a space to allow the glass powder to flocculate and settle for the entire cooling water circulation system, and the main tank 2 is only used for water storage. The clear water at the top of the flocculating tank 3 is returned to the main tank 2 only through the second return line 11 at the top. The first return line 9 is directly connected to the flocculating tank 3.

After the glass edger 1 and the cooling water circulation system are initiated and when the cyclic purification is started, the main tank 2 supplies water to the glass edger 1. After passing through the glass edger 1, the cooling water is recycled to the flocculating tank 3 by the return pump 16, and the flocculant is injected from the flocculant container 5 into the flocculating tank 3. Subsequently, the clear water from the upper part of the flocculating tank 3 is continuously returned to the main tank 2 through the second return line 11. The glass powder is combined with the flocculant to produce large polymer and precipitate rapidly. The glass powder is collected by the glass powder collector 4, while the water separated by the glass powder collector 4 is re-injected into the flocculating tank 3 and returned to the main tank 2 through the second return line 11 to ensure that the cooling water in the main tank 2 has a low glass powder concentration, thus completing the whole circulation process.

Since the water is returned to the flocculating tank 3, the outflow pipe 10 at the bottom of the main tank may not be provided at the bottom of the main tank 2, or the first stirring device 27 may not be provided inside the main tank 2. The apparatus structure is simplified and is suitable for cooling water circulation with a small or medium flow rate.

The cooling water circulation system of the present disclosure can reduce the content of the glass powder in the circulating water and improve the quality of glass products. The flocculating tank and the glass powder collector of the present disclosure can automatically collect glass powder, the collection process is convenient and environment-friendly, and deposition and agglomeration of glass powder in the main tank are avoided. The cooling water circulation system of the present disclosure does not need to continuously replenish fresh water to reduce the content of glass powder, thereby reducing the cooling water consumption. The first stirring device of the present disclosure can prevent glass powder from rapidly precipitating and agglomerating in the main tank, and the second stirring device can promote the flocculation process.

An embodiment of this disclosure also provides a cooling water circulation control method including:
after a glass edger and a cooling water circulation system are initiated, continuously supplying the water from a main tank to the glass edger, and recycling the circulating water returned from the glass edger through a first return line;
collecting the circulating water in a flocculating tank, and introducing a flocculant from a flocculant container into the flocculating tank through an injection line so as to flocculate the glass powder in the circulating water collected in the flocculating tank; and
returning the clear water from an upper part of the flocculating tank to the main tank through a second return line.

With the cooling water circulation control method, the glass powder in the circulating water collected in the flocculating tank can be flocculated and agglomerated to form precipitate and thus settle at the bottom of the flocculating tank, thereby reducing the content of glass powder in the circulating water.

After the flocculant in the flocculant container is introduced into the flocculating tank, the method further includes:
after flocculating for a predetermined time, opening the valve to allow the precipitate formed by flocculation to enter the glass powder collector along with the circulating water, and conveying the circulating water separated from the glass powder collector back into the flocculating tank through a third return line so as to separate the precipitate from the flocculating tank in time.

In an exemplary embodiment, collecting the circulating water in the flocculating tank includes: directly injecting the circulating water returned through the first return line into the main tank, and introducing the circulating water collected in the main tank into the flocculating tank through the outflow pipe at the bottom.

In another exemplary embodiment, collecting the circulating water in the flocculating tank includes: directly injecting the circulating water returned through the first return line into the flocculating tank for collection.

Both of the above approaches can achieve the purpose of this application, and the spirit thereof, which will not be repeatedly described here, does not depart from the design concept of the present invention, therefore all of which fall within the protection scope of this application.

In the description of the present disclosure, the terms "mount", "engage", "connect", "fix" and the like should be interpreted in a broad sense. For example, the term "connect" may refer to a fixed connection, a detachable connection, or an integral connection, or it may refer to direct connection or indirect connection through an intermediate medium. For those of ordinary skill in the art, the specific meanings of the above-mentioned terms in this disclosure can be interpreted according to the context.

In the description of this specification, the description of the terms "one embodiment", "some embodiments", "specific embodiments" and the like means that a specific feature, structure, material or characteristic described in connection with this embodiment or example is included in at least one embodiment or example of the present disclosure. In this specification, the schematic representation of the above terms does not necessarily refer to the same embodiment or example. Moreover, the specific features, structures, materials, or characteristics described may be combined in any one or more embodiments or examples in a suitable manner.

Although the embodiments disclosed in the present application are described above, they are only adopted for easy understanding the present disclosure but not intended to limit the present disclosure. A person skilled in the art to which this disclosure pertains may make various modifications and changes to the form and details of the embodiments without departing from the spirit and scope of this disclosure. The patent protection scope of this disclosure should be defined by the appended claims.

## Claims

1. A cooling water circulation system comprising a main tank configured for supplying water and a first return line configured for returning the water in a glass edger to the main tank, the main tank being in communication with the glass edger through a water supply line, the cooling water circulation system further comprising a filtering mechanism configured to filter out and collect the glass powder in the circulating water.

2. The cooling water circulation system according to claim 1, wherein the filtering mechanism comprises:
a flocculating tank configured to collect the circulating water; and
a flocculant container communicated with the flocculating tank through an injection line and arranged to introduce a flocculant into the flocculating tank, the circulating water collected in the flocculating tank being flocculated under the action of the flocculant.

3. The cooling water circulation system according to claim 2, wherein a bottom of the main tank is communicated with the flocculating tank through an outflow pipe, the flocculating tank is configured to flocculate the glass powder in the circulating water introduced through the outflow pipe, a top of the flocculating tank is communicated with the main tank through a second return line to return clear water from the top of the flocculating tank to the main tank.

4. The cooling water circulation system according to claim 2, wherein the first return line communicated to the flocculating tank is provided, the flocculating tank is configured to flocculate glass powder in the circulating water introduced through the first return line, a top of the flocculating tank is communicated to the main tank through a second return line to return clear water at the top of the flocculating tank to the main tank.

5. The cooling water circulation system according to any one of claims 2-4, wherein a bottom of the main tank is communicated with the flocculating tank through an outflow pipe, and the circulating water at the bottom of the flocculating tank is conveyed into the flocculating tank through the outflow pipe for collection.

6. The cooling water circulation system according to claim 3 or 5, wherein the outflow pipe is provided with a first lift pump conveying the circulating water at the bottom of the main tank to the flocculating tank for collection.

7. The cooling water circulation system according to any one of claims 3-5, wherein the filtering mechanism further comprises a glass powder collector, a bottom of the flocculating tank is communicated with the glass powder collector through an outflow pipe at the bottom of the flocculating tank, a valve is arranged on the outflow pipe at the bottom of the flocculating tank and controls the communication and closure of the flocculating tank and the glass powder collector, the glass powder collector is communicated with the flocculating tank through a third return line, clear water separated by the glass powder collector is conveyed back into the flocculating tank through the third return line.

8. The cooling water circulation system according to any one of claims 2-7, wherein any one or more of the main tank, the flocculant container and the flocculating tank is provided with a stirring device, and the injection line is provided with a metering pump.

9. The cooling water circulation system according to any one of claims 2-8, wherein the filtering mechanism further comprises a filter arranged on the water supply line, and the filter is arranged to filter out glass powder in the supplied circulating water.

10. The cooling water circulation system according to any one of claims 2-9, wherein a water-gas separator is arranged between the first return line and the glass edger, the water-gas separator is arranged to vacuum-absorb and separate the air and the circulating water from the glass edger, collect the separated circulating water and return it through the first return line, and discharge the separated air.

11. The cooling water circulation system according to any one of claims 2-10, wherein any one or more of the main tank, the flocculating tank and the flocculant container is communicated with a fresh water inlet by a water cooling device.

12. The cooling water circulation system according to claim 11, wherein the water cooling device comprises a coolant barrel and a coolant mixer connected to the coolant barrel, and the coolant mixer is connected to the fresh water inlet.

13. A cooling water circulation control method, comprising:
after a glass edger and a cooling water circulation system are initiated, continuously supplying the water from a main tank to the glass edger, and recycling the circulating water returned from the glass edger through a first return line;
collecting the circulating water in a flocculating tank, and introducing a flocculant from a flocculant container into the flocculating tank through an injection line so as to flocculate the glass powder in the circulating water collected in the flocculating tank; and
returning the clear water from an upper part of the flocculating tank to the main tank through a second return line.

14. The cooling water circulation control method according to claim 13, wherein,
after the flocculant in the flocculant container is introduced into the flocculating tank, the method further comprises:
after flocculating for a predetermined time, opening a valve to allow the precipitate formed by flocculation to enter a glass powder collector along with the circulating water, and conveying the circulating water separated from the glass powder collector back into the flocculating tank through a third return line.

15. The cooling water circulation control method according to claim 13 or 14, wherein collecting the circulating water in the flocculating tank comprises:
directly injecting the circulating water returned through the first return line into the main tank, and introducing the circulating water collected in the main tank into the flocculating tank through an outflow pipe at the bottom; or
directly injecting the circulating water returned through the first return line into the flocculating tank for collection.
